# EUROPÄISCHE PATENTANMELDUNG

(11) **EP 0 743 220 A2**
(43) Veröffentlichungstag der Anmeldung: **20.11.1996**
(21) Anmeldenummer: 96107302.0
(22) Anmeldetag: 09.05.1996
(51) Int. Cl.: B60N 2/06

(54) **Gleitschienenführung für Fahrzeugsitze**

(30) Priorität: 13.05.1995 DE 19517701
(71) Anmelder: Johnson Controls / Naue Engineering GmbH, 51388 Burscheid (DE)
(72) Erfinder: Gerich Frank, 42859 Remscheid (DE)
(74) Vertreter: Bergen, Klaus, Dipl.-Ing.

(57) **Zusammenfassung**

Gleitschienenführung für Fahrzeugsitze mit mindestens einer ersten, beweglich geführten, am Fahrzeugsitz befestigten Schiene (1), mindestens einer zweiten, fixierten, mit der ersten Schiene (1) zusammenwirkenden, am Fahrzeugboden befestigten Schiene (7), einer mit Ausnehmungen (5, 13) in der ersten und/oder der zweiten Schiene (1, 7) mittels mindestens eines Zapfens (12) oder mindestens einer Sperrklinke zusammenwirkenden Verstellvorrichtung (11) für den Fahrzeugsitz und zwischen den Ausnehmungen (5) angeordneten, durch den Zapfen (12) oder die Sperrklinke verformbaren und dadurch Energie aufnehmenden Bereichen (A, 14, 15).

## Beschreibung

Die Erfindung betrifft eine Gleitschienenführung für Fahrzeugsitze mit mindestens einer ersten, am Fahrzeugsitz befestigten Schiene, mindestens einer zweiten, mit der ersten Schiene zusammenwirkenden, am Fahrzeugboden befestigten Schiene und einer mit Ausnehmungen in der ersten und/oder der zweiten Schiene mittels mindestens eines Zapfens oder mindestens einer Sperrklinke zusammenwirkenden Verstellvorrichtung für den Fahrzeugsitz.

Bei derartigen Fahrzeugsitzen sind die Befestigungspunkte für den über das Becken des Fahrers und gegebenenfalls des Fahrgastes geführten Teil des Sicherheitsgurtes in der Regel beidseitig am Fahrzeugsitz, insbesondere an den parallelen, am Fahrzeugsitz zu befestigenden Schienen befestigt, um für den Beckengurt stets dieselbe Position bezüglich des Fahrgastes, unabhängig von der Längsverstellung des Fahrzeugsitzes zu gewährleisten.

Bei dieser Befestigungsart ergibt sich die bei einem Frontalaufprall eintretende Verzögerung des Körpers der Person(en) durch den Sicherheitsgurt ausschließlich durch die konstruktiv vorgegebene Dehnung des Sicherheitsgurts. Die Dehnung des Sicherheitsgurts ist jedoch bestimmungsgemäß begrenzt, so daß sich bei Erreichen dieser Grenze ein steiler Anstieg der Verzögerung ergibt, der zu inneren Verletzungen des Fahrgastes führen kann.

Belastungen, die durch einen Aufprall auf das Heck des Fahrzeugs verursacht werden, bewirken, daß der Fahrgast in die Rückenlehne des Fahrzeugsitzes hineingepreßt wird. Die durch diesen Vorgang erzeugten Kräfte bewirken, daß zum einen die Metallstrukturen des Sitzuntergestells und der Rückenlehne sowie zum anderen die Verstellmechanismen, insbesondere die Schwenkeinrichtung für die Rückenlehne, Spitzenbelastungen ausgesetzt sind, die zum Bruch der Teile führen können. Beim Bruch der Rückenlehne oder der Schwenkeinrichtung der Rückenlehne verliert der Körper des Fahrgastes seine Rückenabstützung und es besteht die Gefahr, daß er unkontrolliert im Fahrzeug umhergeschleudert wird, wodurch tödliche Verletzungen hervorgerufen werden können.

Aus der DE 36 31 791 A1 ist eine Sitzschiene mit eingearbeitetem Gurtanker bekannt, bei dem zur Erhöhung des Widerstandes gegenüber einer Trennung zwischen einem abgebogenen Abschnitt der unteren Schiene und dem Endabschnitt des im abgebogenen Abschnitt aufgenommenen Gurtankers ein verlängerter Abschnitt gebildet wird, der sich entlang dem Außenumfang des gebogenen Abschnittes erstreckt und am Außenumfang befestigt ist, wodurch die auf den einen Endabschnitt des Gurtankers ausgeübten Belastungen vom abgebogenen Abschnitt und dem verlängerten Abschnitt aufgenommen werden.

Der Erfindung liegt demgegenüber das Problem zugrunde, die Verzögerungsspitzen bei Erreichen der Grenze der Dehnfähigkeit eines Sicherheitsgurts abzubauen.

Zur Lösung wird gemäß den Merkmalen des Patentanspruchs 1 bei einer Gleitschienenführung der eingangs erwähnten Art vorgeschlagen, zwischen den Ausnehmungen durch den Zapfen oder die Sperrklinke der Verstellvorrichtung verformbare und dadurch Energie aufnehmende Bereiche gezielt anzuordnen. Diese Maßnahme führt im Rahmen der Problemlösung überraschend nicht nur zur Verringerung der Verletzungsschwere, sondern auch dazu, daß die Sitzstruktur für eine geringere Belastung ausgelegt werden kann und somit leichter wird.

Wenn die Ausnehmungen für den Zapfen oder die Sperrklinke der Verstellvorrichtung aus beabstandeten Bohrungen oder Schlitzen bestehen, können erfindungsgemäß dazwischen weitere Bohrungen, gegebenenfalls kleineren Durchmessers angeordnet sein, deren Abstände so bemessen sind, daß sich die dazwischen liegenden Bereiche der Schiene bei Überschreiten einer vorbestimmten Längskraft durch den Zapfen oder die Sperrklinken aufschlitzen lassen, welche Verformungsarbeit zu einer Energieabsorption und dadurch zu einem Abbau der Verzögerungsspitzen führt. Gemäß einer anderen Ausführungsform können die Ausnehmungen aus beabstandeten Bohrungen oder Schlitzen bestehen und dazwischen querschnittsgeschwächte Bereiche angeordnet sein, deren Querschnitt so bemessen ist, daß sich diese Bereiche bei Überschreiten einer vorbestimmten Längskraft durch den Zapfen oder die Sperrklinke aufschlitzen lassen.

Schließlich ist es des weiteren auch möglich, die Ausnehmungen durch beabstandete Erweiterungen eines Längsschlitzes zu bilden, wobei die gegenüber dem Zapfendurchmesser geringere Breite des Längsschlitzes so bemessen ist, daß er sich bei Überschreiten einer vorbestimmten Längskraft durch den Zapfen oder die Sperrklinke auf den Durchmesser des Zapfens bzw. die Breite der Sperrklinke auftreiben läßt.

Allen Ausführungsformen liegt die Überlegung zugrunde, eine begrenzte Verschiebung des Fahrzeugsitzes aufgrund von sehr großen Längskräften zuzulassen und während dieser Längsverschiebung eine Energieaufnahme durch Verformung von Bereichen der am Fahrzeugsitz befestigten und/oder diese führenden Schiene zu bewirken, um auf diese Weise Verzögerungsspitzen abzubauen, die beim Erreichen der maximal zugelassenen Dehnung des Sicherheitsgurtes (Frontalaufprall) bzw. beim Erreichen einer zu definierenden Längskraft (Frontal- bzw. Heckaufprall) auftreten.

Die Erfindung wird nachstehend anhand mehrerer, in der Zeichnung dargestellter Ausführungsbeispiele näher erläutert. Es zeigen:
- Fig. 1: eine perspektivische Darstellung einer Gleitschienenführung gemäß einer ersten Ausführungsform;
- Fig. 2: eine perspektivische Darstellung einer am Fahrzeugsitz zu befestigenden Schiene gemäß einer zweiten Ausführungsform;
- Fig. 3: einen Querschnitt durch die Schiene gemäß Fig. 2;
- Fig. 4: eine perspektivische Teilansicht einer am Fahrzeugsitz zu befestigenden Schiene gemäß einer dritten Ausführungsform; und
- Fig. 5: einen Querschnitt durch die Schiene gemäß Fig. 4.

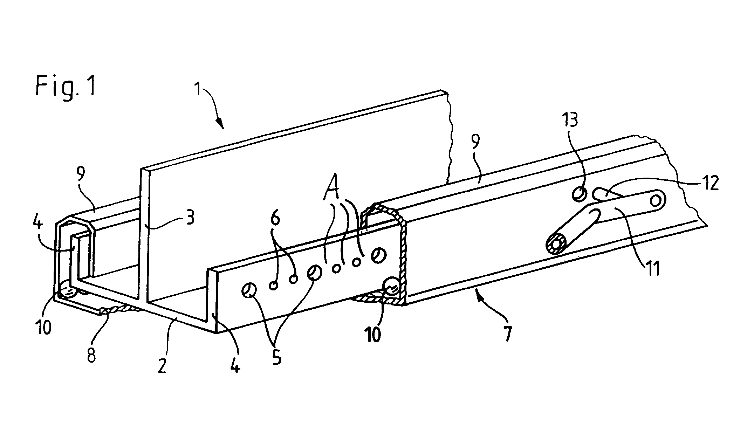

Aus Fig. 1 ist eine Gleitschienenführung für Fahrzeugsitze ersichtlich, die teilweise gebrochen dargestellt ist. Der besseren Übersichtlichkeit halber ist ein an einer ersten Schiene 1 zu befestigender Fahrzeugsitz und der Fahrzeugboden, an dem eine zweite Schiene 7 zu befestigen ist, nicht dargestellt.

Die erste Schiene 1 besteht aus einem waagerecht verlaufenden Steg 2, aus dem mittig ein Schenkel 3 aufragt, der mit einem nicht dargestellten Fahrzeugsitz verschraubt wird. Parallel zum mittleren Schenkel 3 sind zwei äußere Schenkel 4 vorgesehen. Einer oder beide Schenkel 4 weisen beabstandete Bohrungen 5 auf, in die ein Rastzapfen 12 eines Rasthebels 11 einer Verstellvorrichtung für den Fahrzeugsitz eingreift.

Eine zweite Schiene 7 mit einem parallel zum Steg 2 angeordneten Steg 8 weist parallele, U-förmig gebogene Schenkel 9 auf, die die Schenkel 4 der ersten Schiene 1 umgreifen. Die Schiene 1 ist in der Schiene 7 mittels Kugeln 10 im wesentlichen reibungsfrei geführt. An einer Außenfläche eines der Schenkel 9 ist der Rasthebel 11 schwenkbar gelagert, dessen Rastzapfen 12 eine Bohrung 13 im Schenkel 9 durchgreift. In der Raststellung greift der Rastzapfen 12 des weiteren in eine der Bohrungen 5 der ersten Schiene 1 ein und legt diese erste Schiene 1 bezüglich der zweiten Schiene 7 fest.

Um eine Längsverstellung des Fahrzeugsitzes zu bewirken, wird der Rasthebel 11 in bekannter Weise so betätigt, daß der Rastzapfen 12 außer Eingriff mit einer Bohrung 5 kommt, wonach sich der Sitz mit den Schienen 1 in die gewünschte Stellung verschieben läßt. Danach gelangt der Rasthebel 11 durch Federkraft in die Raststellung zurück, in der der Rastzapfen 12 wiederum in Eingriff mit einer Bohrung 5 im Schenkel 4 der ersten Schiene 1 gelangt.

Zwischen den Bohrungen 5 sind weitere Bohrungen 6 kleineren Durchmessers angeordnet. Die Anzahl der Bohrungen 6 ist so bemessen, daß die Bereiche A des Schenkels 4 zwischen den Bohrungen 5 und 6 widerstandsfähig genug sind, um den üblichen im Fahrbetrieb eines Fahrzeuges entstehenden Beanspruchungen gewachsen zu sein. Wird die Schiene 1 mit dem darin befestigten Fahrzeugsitz und der aufsitzenden, durch einen Sicherheitsgurt am Sitz gehaltenen Person aufgrund beispielsweise eines Auffahrunfalls nach vorwärts beschleunigt, hält der in eine Bohrung 5 eingreifende Zapfen 12 die Schiene 1 so lange in der eingerasteten Stellung fest, wie eine vorbestimmbare Längskraft nicht überschritten wird. Wird sie jedoch überschritten, werden die Bereiche A des Schenkels 4 zwischen den Bohrungen 5 und 6 aufgeschlitzt, so daß die Schiene 1 mit dem darin befestigten Fahrzeugsitz und der aufsitzenden Person vorwärts gleiten kann, wobei mit diesem Vorwärtsgleiten durch die Verformarbeit ein Energieabbau verbunden ist, der zu einem Abbau von Verzögerungsspitzen führt.

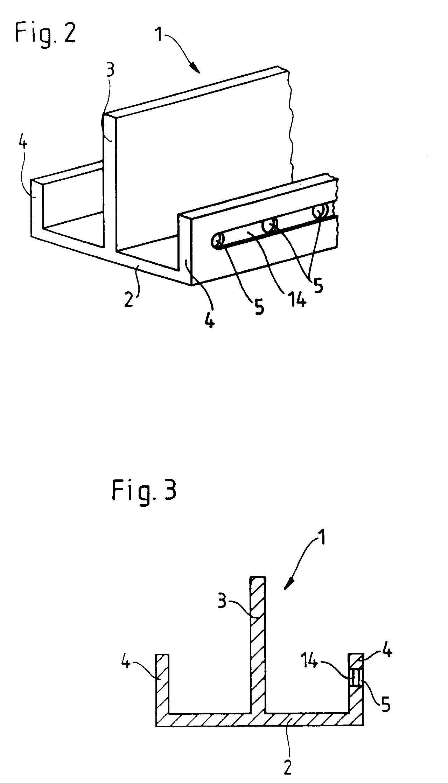

In den Fig. 2 und 3 ist eine andere Ausführungsform der Erfindung dargestellt. Bei dieser Ausführungsform befinden sich zwischen den Bohrungen 5 querschnittsgeschwächte Bereiche 14, deren Querschnitt so bemessen ist, daß sich diese Bereiche 14 bei Überschreiten einer vorbestimmten Längskraft durch den Zapfen 12 aufschlitzen lassen.

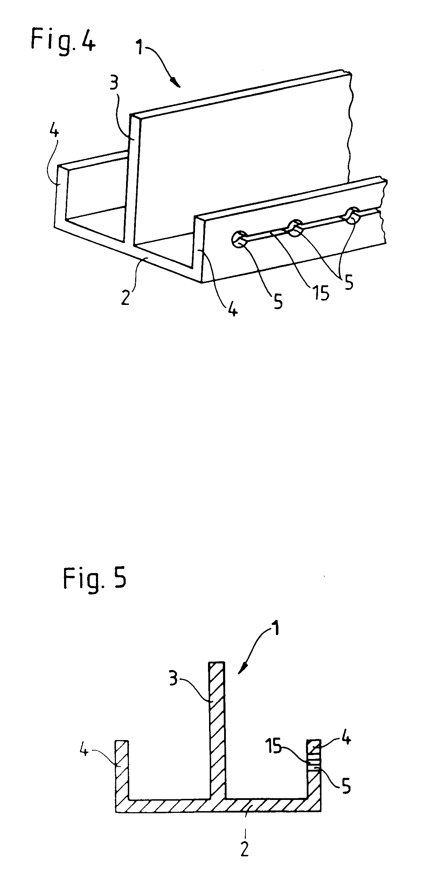

Bei der in den Fig. 4 und 5 dargestellten Ausführungsform erstreckt sich im Schenkel 4 ein Längsschlitz 15, dessen Breite kleiner als der Durchmesser des Rastzapfens 12 ist. In regelmäßigen Abständen ist der Längsschlitz 15 mit bohrungsähnlichen Erweiterungen 5 versehen, in die der Rastzapfen 12 je nach Stellung der ersten Schiene 1 mit Bezug auf die zweite Schiene 7 eingreift. Die Breite dieses Längsschlitzes 15 ist so bemessen, daß er sich bei Überschreiten einer vorbestimmten Längskraft durch den Zapfen 12 auf den Durchmesser des Zapfens 12 auftreiben läßt, wobei dies wiederum mit einer Energieabsorption verbunden ist, die zum Abbau von Verzögerungsspitzen führt.

## Patentansprüche

1. Gleitschienenführung für Fahrzeugsitze mit
- mindestens einer ersten, beweglich geführten, am Fahrzeugsitz befestigten Schiene (1);
- mindestens einer zweiten, fixierten, mit der ersten Schiene (1) zusammenwirkenden, am Fahrzeugboden befestigten Schiene (7);
- einer mit Ausnehmungen (5, 13) in der ersten und/oder der zweiten Schiene (1, 7) mittels mindestens eines Zapfens (12) oder mindestens einer Sperrklinke zusammenwirkenden Verstellvorrichtung (11) für den Fahrzeugsitz;
- mindestens einem Sicherheitsgurtbefestigungspunkt am Fahrzeugsitz, insbesondere an der bzw. den an ihm befestigten Schiene(n) (1); und
- zwischen den Ausnehmungen (5) angeordneten, durch den Zapfen (12) oder die Sperrklinke verformbaren und dadurch Energie aufnehmenden Bereichen (A, 14, 15), die eine gezielte Materialreduzierung aufweisen.

2. Führung nach Anspruch 1, dadurch gekennzeichnet, daß die Ausnehmungen (5) aus beabstandeten Bohrungen oder Schlitzen bestehen und dazwischen weitere Bohrungen (6) angeordnet sind, deren Abstände und Durchmesser so bemessen sind, daß sich die dazwischenliegenden Bereiche der Schiene (1) bei Überschreiten einer vorbestimmten Längskraft durch den Zapfen (12) oder die Sperrklinke aufschlitzen lassen.

3. Führung nach Anspruch 1, dadurch gekennzeichnet, daS die Ausnehmungen (5) aus beabstandeten Bohrungen oder Schlitzen bestehen und dazwischen querschnittsgeschwächte Bereiche (14) angeordnet sind, deren Querschnitt so bemessen ist, daß sich diese Bereiche (14) bei Überschreiten einer vorbestimmten Längskraft durch den Zapfen (12) oder die Sperrklinke aufschlitzen lassen.

4. Führung nach Anspruch 1, dadurch gekennzeichnet, daS die Ausnehmungen (5) aus beabstandeten Erweiterungen eines Längsschlitzes (15) bestehen, wobei die Breite des Längsschlitzes (15) so bemessen ist, daß er sich bei Überschreiten einer vorbestimmten Längskraft durch den Zapfen (12) oder die Sperrklinke auf den Durchmesser des Zapfens (12) bzw. die Breite der Sperrklinke auftreiben läßt.
